# EUROPEAN PATENT SPECIFICATION

(11) **EP 3 680 266 B1**
(45) Date of publication and mention of the grant of the patent: **27.08.2025**
(21) Application number: 19150930.6
(22) Date of filing: 09.01.2019
(51) Int. Cl.: C08F 279/04, C08F 2/00, C08L 55/02

(54) **INFLUENCE OF VINYLIDENE SUBSTITUTED AROMATIC MONOMERS ON NITRILE MIGRATION**
EINFLUSS VON VINYLIDENSUBSTITUIERTEN AROMATISCHEN MONOMEREN AUF DIE NITRILMIGRATION
INFLUENCE DE MONOMÈRES AROMATIQUES DE VINYLIDÈNE SUBSTITUÉS SUR LA MIGRATION DE NITRILE

(43) Date of publication of application: 15.07.2020
(73) Proprietor: Trinseo Europe GmbH, 8808 Pfaeffikon SZ (CH)
(72) Inventor: Lam, Chin Ming, Tsuen Wan N.T. (HK); Wong, Po Lung, Yuen Long N.T. (HK); Van Nuffel, Claude T. E., 9041 Oostakker (BE)
(74) Representative: Hoffmann Eitle

(56) References cited:
- JP-B2- 2 895 565
- US-A1- 2004 059 079
- SCHELLENBERG J ET AL: "Influence of styrene-acrylonitrile oligomers on the properties of ABS graft copolymers", EUROPEAN POLYMER JOURNAL, PERGAMON PRESS LTD. OXFORD, GB, vol. 29, no. 5, 1 May 1993 (1993-05-01), pages 727 - 730, XP024053265, ISSN: 0014-3057, [retrieved on 19930501], DOI: 10.1016/0014-3057(93)90135-3
- LICKLY T D ET AL: "The migration of acrylonitrile from acrylonitrile/butadiene/styrene polymers into food-simulating liquids", FOOD AND CHEMICAL TOXICOLOGY, PERGAMON, GB, vol. 29, no. 1, 1 January 1991 (1991-01-01), pages 25 - 29, XP025511832, ISSN: 0278-6915, [retrieved on 19910101], DOI: 10.1016/0278-6915(91)90059-G
- DI PASQUALE G ET AL: "Gas chromatographic head-space determination of residual acrylonitrile in acrylonitrile-butadiene-styrene resins and migration into a simulated fatty foodstuffs liquid", JOURNAL OF CHROMATOGRAPHY A, ELSEVIER, AMSTERDAM, NL, vol. 160, no. 1, 11 January 1978 (1978-01-11), pages 133 - 140, XP026749461, ISSN: 0021-9673, [retrieved on 19780111], DOI: 10.1016/S0021-9673(00)91789-8

## Description

### TECHNICAL FIELD

Disclosed are acrylonitrile-butadiene-styrene polymers which include less than 200 ppm of residual styrene monomer. Also disclosed is a method of minimizing acrylonitrile migration from acrylonitrile-butadiene-styrene polymers where the amount of residual styrene monomer in the acrylonitrile-butadiene-styrene polymer is reduced.

### BACKGROUND

Polymers prepared from vinyl substituted aromatic monomers, such as styrene, are used in a number of polymeric systems, including foams, packaging (food packaging), medical, electronic, optical, appliance and automotive applications. In certain applications the glass transition temperature of homopolymers of vinyl substituted aromatic monomers is lower than required for the applications. Polymers of vinyl substituted aromatic monomers do not exhibit great impact properties and modified polymers containing vinyl substituted aromatic monomers have been developed to improve the impact resistance. Such modified polymers may contain butadiene-based rubber, for example, copolymers of styrene and acrylonitrile modified with polybutadiene rubber, commonly referred to as acrylonitrile-butadiene-styrene.

There are concerns that nitrile-vinylidene substituted aromatic copolymers will have potentially harmful free nitrile monomer leach out of articles prepared from the polymers. In fact, the issues above have been the subject of regulations issued by the EU CC which requires that the migration, for example, of acrylonitrile monomer in acrylonitrile-butadiene-styrene polymers be less than about 10 ppb under certain conditions.

Thus, there is a need for nitrile-vinylidene substituted aromatic polymers, where the migration of nitrile monomer in the polymers is less than about 10 ppb under certain conditions.

J. Schellenberg et al., Eur. Polym. J., Vol. 29, No. 5, pp. 727-730, 1993, describes the influence of styrene-acrylonitrile oligomers on the properties of acrylonitrile-butadiene-styrene graft copolymers.

US 2004/059079 A1 describes an emulsion polymerization process for the preparation of polybutadiene grafted with styrene and acrylonitrile monomers in a reaction system.

T. D. Lickly et al., Food Chem. Toxicol., Vol. 29, No. 1, pp. 25-29, 1991, describes the migration of acrylonitrile from acrylonitrile/butadiene/styrene polymers into food-simulating liquids.

### SUMMARY

Disclosed herein are polymers which satisfy these and other needs. The polymers, compositions and articles disclosed contain less than 200 ppm of residual styrene monomer. The migration of free/residual/unreacted acrylonitrile monomer is less than 10 ppb or less in the polymers, compositions and articles disclosed.

Also disclosed is a method of minimizing acrylonitrile migration from an acrylonitrile-butadiene-styrene polymer where the amount of residual styrene monomer in the acrylonitrile-butadiene-styrene polymer is reduced. The amount of residual styrene monomer is less than 200 ppm.

### DETAILED DESCRIPTION

One or more as used herein means that at least one, or more than one, of the recited components may be used as disclosed. Residual content of a component refers to the amount of the component present in free form or reacted with another material, such as a polymer. Typically, the residual content of a component can be calculated from the ingredients utilized to prepare the component or composition. Alternatively, it can be determined utilizing known analytical techniques. Heteroatom as used herein means nitrogen, oxygen, and sulfur, more preferred heteroatoms include nitrogen and oxygen with oxygen most preferred. Hydrocarbyl as used herein refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included in hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified.

The compositions may contain branching agents commonly used in vinylidene aromatic based polymers. The branching agents may be vinyl substituted aromatic monomers having 2 or more vinyl groups. Other branching agents may include other difunctional and in general multifunctional (functionality >2) monomers, multifunctional initiators and multifunctional chain transfer agents and the like. The branching agents may be present in the polymerizable compositions in an amount of 0.001 percent by weight of the composition or greater, 0.002 percent by weight or greater or 0.003 percent by weight or greater. The branching agents may be present in the polymerizable compositions in an amount of 0.5 percent by weight of the composition or less, 0.2 percent by weight or less or 0.1 percent by weight or less.

The copolymers disclosed herein may further comprise one or more (meth)acrylates. (Meth) acrylate as used herein refers to compounds having a vinyl group bonded to the carbonyl moiety of an alkyl ester wherein the carbon of the vinyl group bonded to the carbonyl group further has a hydrogen or a methyl group bonded thereto. The term (meth) as used in this context refers to compounds having either of a hydrogen or methyl group on the carbon of the vinyl group bonded to the carbonyl group. (Meth)acrylates useful include those that correspond to the formula: 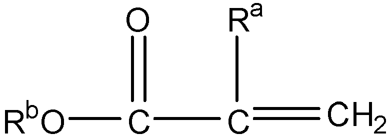 wherein R^{a} is separately in each occurrence H or -CH₃; and R^{b} may be a C ₁ to C-₃₀ alkyl group or **C** ₁₋₁₀ alkyl group. Examples of the one or more (meth)acrylates include lower alkyl (meth)acrylates, such as methyl (meth)acrylate, ethyl (meth)acrylate, propyl (meth)acrylate, butyl (meth)acrylate, pentyl (meth)(acrylate) and hexyl (meth) acrylate. **The** one or more (meth)acrylates in the copolymers may be present in sufficient amount to provide the desired properties of the copolymer such as processability, practical toughness, refractive index, environmental stress crack resistance, hydrolytic stability, thermal stability, UV stability, impact resistance, weatherability, and the like. **The** copolymers disclosed herein contain (meth)acrylates in an amount of 0 percent by weight of the polymerizable compositions or copolymers or greater, 1 percent by weight or greater or 2 percent by weight or greater. **The** copolymers disclosed herein contain (meth)acrylates in an amount of 20 percent by weight of the copolymers or less, 15 percent by weight or less, 10 percent by weight or less, 8 percent by weight or less or 5 percent by weight or less.

The compositions disclosed may contain impact modifiers. The terms impact modifiers and rubbers are used interchangeably herein. Various impact modifiers may be used in the compositions disclosed; such as diene rubbers, ethylene propylene rubbers, ethylene propylene diene (EPDM) rubbers, ethylene copolymer rubbers, acrylate rubbers, polyisoprene rubbers, silicon rubbers, silicon-acrylate rubbers, polyurethanes, thermoplastic elastomers, halogen containing rubbers, and mixtures thereof. Also suitable are interpolymers of rubber-forming monomers with other copolymerizable monomers. The rubbers may be present in the formulated composition in sufficient amount to provide the desired impact properties to the composition. Desired impact properties include increased izod, charpy, gardner, tensile, falling dart, and the like. The compositions disclosed herein contain impact modifiers (rubbers) in an amount of 0.5 percent by weight of the compositions or greater, 1 percent by weight or greater or 2 percent by weight or greater. The compositions disclosed herein contain impact modifiers (rubbers) in an amount of 50 percent by weight of the compositions or less, 45 percent by weight or less, 40 percent by weight or less, 30 percent by weight or less, 20 percent by weight or less or 10 percent by weight or less. The compositions disclosed herein contain the copolymer in an amount of 0.5 percent by weight of the compositions or greater. The compositions disclosed herein contain copolymer in an amount of 99.5 percent by weight of the compositions or less, 90 percent by weight of the compositions or less, 80 percent by weight of the compositions or less or 50 percent by weight of the compositions or less. Compositions, formulated compositions, as used in this context are the formulated compositions containing all of the ingredients for the intended use.

The rubbers may be diene rubbers such as polybutadiene, polyisoprene, polypiperylene, polychloroprene, and the like or mixtures of diene rubbers, that is, any rubbery polymers of one or more conjugated 1,3-dienes, such as 1,3-butadiene. Such rubbers include homopolymers of 1,3-butadiene and copolymers of 1,3-butadiene with one or more copolymerizable monomers, such as vinyl substituted aromatic (styrene). The diene rubber may be the homopolymer of 1,3-butadiene. Exemplary copolymers of 1,3-butadiene are block or tapered block rubbers of at least 30 weight percent 1,3-butadiene, from 50 weight percent, from 70 weight percent, or from 90 weight percent 1,3-butadiene and up to 70 weight percent vinyl substituted aromatic monomer, up to 50 weight percent, up to 30 weight percent, or up to 10 weight percent vinyl substituted aromatic monomer, weights based on the weight of the 1,3-butadiene copolymer.

The impact modifiers employed may be those polymers and copolymers which exhibit a second order transition temperature, sometimes referred to as the glass transition temperature (Tg), for the diene fragment which is not higher than 0° C or not higher than -20° C. as determined using conventional techniques, for example ASTM Test Method D 746-52 T. Tg is the temperature or temperature range at which a polymeric material shows an abrupt change in its physical properties, including, for example, mechanical strength. Tg can be determined by differential scanning calorimetry (DSC). The diene rubber may have a cis content equal to or less than 99 percent or less than 97 percent. The cis content of the diene rubber may be equal to or greater than 20 percent or greater than 37 percent wherein the cis weight percent is based on the weight of the diene rubber. The rubber may be a 1,3-butadiene rubber having at least 1 weight percent 1,2-vinyl or at least 7 weight percent 1,2-vinyl based on the weight of the 1,3-butadiene rubber. The 1,3-butadiene rubber may have less than or equal to 30 weight percent 1,2-vinyl or less than or equal to 13 weight percent 1,2-vinyl based on the weight of the 1,3-butadiene rubber. The diene rubber may have a weight average molecular weight of at least 100 kilograms per mole (kg/mole)- or a weight average molecular weight of at least a 300 kg/mole. The diene rubber may have a weight-average molecular weight equal to or less than 900 kg/mole or a weight average molecular weight equal to or less than 600 kg/mole. The diene rubber having a solution viscosity of at least 10 centi Stokes (cSt) (10 percent (%) solution in styrene) or a solution viscosity of 30 cSt. The diene rubber may have a solution viscosity equal to or less than 500 cSt or equal to or less than 400 cSt. The rubber, with graft and/or occluded polymers if present, is dispersed in the continuous matrix phase as discrete particles. The rubber particles may comprise a range of sizes having a mono-modal, bimodal, or multimodal distribution. The average particle size of a rubber particle, as used herein, will, refer to the volume average diameter. In most cases, the volume average diameter of a group of particles is the same as the weight average. The average particle diameter measurement generally includes the polymer grafted to the rubber particles and occlusions of polymer within the particles. Unless otherwise specified, the rubber particle sizes disclosed and claimed herein are determined on a Coulter Multisizer II or II e with the ACCUCOMP^{™} Software Version 2.01. by the following method: about 3 granules of polymer samples (30-70 mg) are dissolved in 5 milliliters (ml) of Dimethyl Formamide (DMF), using an ultrasonic bath for agitation for approximately 15 to 20 minutes. 10 ml or an electrolyte solution (1 percent of NH₄SCN in DMF) is mixed with 0.2 ml of the sample solution. The coulter measuring stand is used with 20 micrometer Coulter tube and a 1.16 micrometer calibration material. The coincidence level indicator of the apparatus should read between 5 and 10 percent. If the reading is above 10 percent, dilute the sample in a beaker with electrolyte solution, or if it is too low, add more drops of the polymer solution in DMF. The volumetric mean particle size is reported. The average particle size of the rubber particles may be equal to or greater than 0.05 micrometers (microns) (µm), equal to or greater than about 0.1 micrometers, and 0.5 micrometers. The average particle size of the rubber particles may be equal to or less than 10 micrometers, equal to or less than 5 micrometers, or equal to or less than 4 micrometers.

The disclosed compositions may also optionally contain one or more additives that are commonly used in compositions of this type. Exemplary additives include: ignition resistant additives, stabilizers, colorants (e.g., pigments, carbon black, TiO₂, etc.), antioxidants (e.g., IRGANOX 1076 or IRGAFOS 178), adsorbers (e.g., zeolites, activated carbon, bamboo charcoal, etc.) antistats, silicon oils, flow enhancers, mold releases, etc. Exemplary ignition resistance additives include halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Compounds which stabilize mass polymerized rubber-modified vinylidene substituted aromatic copolymer compositions against degradation caused by, but not limited to heat, light, and oxygen, or a mixture thereof may be used. Fillers and reinforcements may also be present. Exemplary fillers include talc, clay, wollastonite, mica, glass or a mixture thereof.

If used, such additives and/or fillers may be present in the formulated compositions in an amount 0.01 percent by weight or greater, 0.1 percent by weight or greater, 1 percent by weight or greater, 2 percent by weight or greater, or 3 percent by weight or greater based on the weight of the compositions. The additives and/or fillers may be present in an amount of 40 percent by weight or less, 30 percent by weight or less, 20 percent by weight or less, 15 percent by weight or less, 10 percent by weight or less, 5 percent by weight or less based on the weight of the composition. The additives may be present in amounts up to 5 weight percent while fillers may be present in amounts up to 40 weight percent based on the weight of the compositions.

Disclosed herein are copolymers including acrylonitrile, butadiene and styrene monomers in various proportions. The acrylonitrile-butadiene-styrene polymers disclosed may contain styrene monomer in a concentration of 25 percent by weight or more, 40 percent by weight or more, 50 percent by weight or more or 55 percent by weight or more, butadiene monomer in a concentration of 5 percent by weight or more, 6 percent by weight or more, 9 percent by weight or more, or 10 percent by weight or more, acrylonitrile monomer in a concentration of 5 percent by weight or more, or 10 percent by weight or more 12 percent by weight or more or 18 percent by weight or more. The acrylonitrile-butadiene-styrene polymers disclosed may contain styrene monomer at a concentration of 90 percent by weight or less, 85 percent by weight or less, 78 percent by weight or less, 75 percent by weight or less or 65 percent by weight or less, butadiene monomer at a concentration of 35 percent by weight or less, 25 percent by weight or less, 20 percent by weight or less or 18 percent by weight or less, acrylonitrile monomer at a concentration of 40 percent by weight or less, 35 percent by weight or less, about 30 percent by weight or less, 23 percent by weight or less or 18 percent by weight or less. The acrylonitrile-butadiene-styrene polymers disclosed may contain styrene monomer at a concentration of 60 percent by weight, butadiene monomer at a concentration of 12 percent by weight or less and acrylonitrile monomer at a concentration of 23 percent.

The polymers disclosed may optionally include acrylate comonomer and/or maleimide comonomer. The comonomer may be n-butyl acrylate or N-phenyl maleimide or combinations thereof. The n-butyl acrylate may be present in an amount of less than 10 wt%, while the N-phenyl maleimide may be present in an amount of less than 5 wt%.

The polymers disclosed herein contain the residual styrene monomer at an amount of less than 200 ppm, less than 175 ppm or less than 160 ppm. The copolymers disclosed herein may contain the residual styrene monomer at an amount of greater than 50 ppm, greater than 100 ppm, greater than 125 ppm, or greater than 150 ppm. The polymer is an acrylonitrile-butadiene-styrene copolymer.

The rate of nitrile migration in the polymers disclosed herein is less than 10 ppb. The rate of nitrile migration in the copolymers disclosed herein may be greater than 5 ppb.

Various techniques for producing the copolymers are disclosed. Examples of these known polymerization processes include bulk, mass-solution, or mass-suspension polymerization, generally known as mass polymerization processes. For a good discussion of how to make monovinylidene aromatic copolymer containing compositions see "Modern Styrenic Polymers" of Series In Polymer Science (Wiley), Ed. John Scheirs and Duane Priddy, ISBN 0 471 497525. Also, for example, U.S. Pat. Nos. 3,660,535; 3,243,481; and 4,239,863. Continuous mass polymerization techniques are advantageously employed in preparing the copolymers. The polymerization may conducted in one or more substantially linear, stratified flow or so-called "plug-flow" type reactors such as described in U.S. Pat. No. 2,727,884, sometimes referred to as multizone plug flow bulk process, which may or may not comprise recirculation of a portion of the partially polymerized product or, alternatively, in a stirred tank reactor wherein the contents of the reactor are essentially uniform throughout, which is generally employed in combination with one or more plug-flow type reactors. The stirred tank reactors can be boiling and/or coil reactors. Such reactors can be used in series. Processes for use of the stirred tank reactors for preparing copolymers are disclosed in Modern Styrenic Polymers, Edited by John Schiers and Duane Priddy, Wiley, ISBN 0 471 49752 5, published in 2003, see pp 43-72. Alternatively, a parallel reactor set-up, as taught in EP 412801, may also be suitable for preparing the copolymers.

Multizone plug flow bulk processes include a series of polymerization vessels (or towers), consecutively connected to each other, providing multiple reaction zones. A mixture of monomers used to prepare the copolymer is formed and then fed into the reaction system. A rubber, for example butadiene rubber may be dissolved in the mixture monomers before being fed into the reaction system. The polymerization can be thermally or chemically initiated, and viscosity of the reaction mixture will gradually increase. During the reaction course, where present, the rubber may become grafted with the copolymer and, in the rubber solution, bulk copolymer (referred to also as free copolymer or matrix copolymer or non-grafted copolymer) is also formed. At a point where the free copolymer cannot be "held" in one single, continuous "phase" of rubber solution, it begins to form domains of copolymer dissolved in monomer and solvent. The polymerization mixture now is a two-phase system. As polymerization proceeds, more and more free copolymer is formed, and the rubber phase starts to disperse itself (rubber domains) in the matrix of the ever-growing free copolymer phase. Eventually, the free copolymer becomes a continuous phase. Some copolymer is occluded inside the rubber particles as well. Pre-phase inversion means that the rubber solution is a continuous phase and that no rubber particles are formed, and post phase inversion means that substantially all of the rubber phase has converted to rubber domains and there is a continuous copolymer phase. Following the phase inversion, more matrix copolymer may be formed

A feed with a functional monomer such as N-phenyl maleimide that increases the Tg of the matrix and the heat resistance of the product can be added in one or more location throughout the polymerization process, the location(s) may be the same or different from where the co-monomers are added, for example, see U.S. Pat. Nos. 5,412,036 and 5,446,103.

A feed with a functional additive such as ethylene-bisstearamide, dialkyladipates, polydimethylsiloxane, or other lubricants or release agents that increases the processability of the product can be added in one or more location throughout the polymerization, devolatization and conveying process, the location(s) may be the same or different from where the co-monomers are added.

When a desirable monomer conversion level and a matrix copolymer of desired molecular weight distribution is obtained, where rubber is present, the polymerization mixture may then be subjected to conditions sufficient to cross-link the rubber and remove any unreacted monomer and solvent. Such cross-linking and removal of unreacted monomer, as well as removal of diluent or solvent, if employed, and other volatile materials is advantageously conducted employing conventional devolatilization techniques, such as introducing the polymerization mixture into a devolatilizing chamber, flashing off the monomer and other volatiles at elevated temperatures, for example, from 130° C to 300° C. and/or under vacuum and removing them from the chamber. Thereafter the polymer may be extruded, and bulk pellets obtained from a pelletizer.

The temperatures at which polymerization is conducted are dependent on a variety of factors including the specific initiator and type and concentration of rubber, comonomers, reactor set-up (for example, linear, parallel, recirculation, etc.), and reaction solvent, if any, employed. Polymerization temperatures from 60° C to 160° C may be employed prior to phase inversion with temperatures from 100° C to 200° C. being employed subsequent to phase inversion. Mass polymerization at such elevated temperatures is continued until the desired conversion of monomers to polymer is obtained. Generally, conversion (also sometimes referred to as percent solids) of from 55 to 90, or 60 to 85, weight percent of the monomers added to the polymerization system (that is, monomers added in the feed and any additional stream, including any recycle stream) to polymer is desired. Percent solids is the ratio of the weight of the solids (for example, rubber plus matrix (co)polymer) to the weight of the reaction mixture (for example, unpolymerized monomer(s)) expressed in percent at any specified time during the polymerization reaction.

To synthesize rubber-modified copolymers with high performance by the mass process, four aspects are important among many others. These aspects are grafting of the rubber substrate prior to phase inversion, rubbery domain and/or particle formation or sizing during phase inversion, building molecular weight and molecular weight distribution of the matrix, and cross-linking of the rubber particle at the completion point of the mass polymerization. Alternatively, a combination of mass and suspension polymerization techniques are employed. Using these techniques, following phase inversion and subsequent size stabilization of the rubber particles, the partially polymerized product can be suspended with or without additional monomers in an aqueous medium which contains a polymerized initiator and polymerization subsequently completed. The rubber-modified copolymer is subsequently separated from the aqueous medium by acidification, centrifugation or filtration. The recovered product is then washed with water and dried.

A polymer's molecular weight is directly related to the entanglement effects contributing to its rheological and physical properties. The molecular weight of the matrix copolymer produced in the grafting reactor during the production of the rubber-modified vinylidene aromatic substituted copolymer can be adjusted by the addition of a suitable chain transfer agent. Chain transfer agents, or molecular weight regulators, are substances which can undergo atom or group transfer or an addition-elimination. Organic molecules with labile hydrogens and are well known, for example, alpha-methyl styrene dimer, mercaptans or thiols such as n-dodecylmercaptan (nDM) and thioglycolate, disulfides, dithiauram disulfides, monosulfides, halides or halocarbons, common solvents and certain unsaturated compounds such as allyl peroxides, allyl halides, allyl sulfides, and terpenes such as terpinoline. Also transition metal complexes as cobalt(II) porphyrin complexes can be used as transfer agent. Chain transfer agents are added in an amount from about 0.0001 to 10 weight percent based on the weight of the reaction mixture (that is, rubber, monomer(s), and solvent, if any). The chain transfer agent may be added in an amount equal to or greater than about 0.001 weight percent, about 0.002, or about 0.003 weight percent based on the weight of the reaction mixture. The chain transfer agent may be added in an amount equal to or less than about 0.5 weight percent, about 0.2, or about 0.1 weight percent based on the weight of the reaction mixture.

The chain transfer agent may be added all at once in one reactor zone or it may be added in two or more reactor zones. Chain transfer agent may be added before phase inversion, during rubber particle sizing, more may be added after particle sizing to help control the matrix molecular weight, and optionally more may be added later to fine tune the matrix molecular weight/molecular weight distribution. The chain transfer agent may be added at the beginning of the polymerization (in other words, at a time where the percent solids for the reaction mixture is equal to the weight percent rubber) in a first amount equal to or greater than 0.001 weight percent, from 0.002 and 0.1 weight percent, or from 0.003 and 0.05 weight percent based on the weight of the reaction mixture. The amount of chain transfer agent added later, for example after 40 percent solids, 30 percent solids, is added in a second amount equal to or less than 0.7 weight percent, 0.001 to about 0.6 weight percent, or from 0.002 to 0.5 weight percent based on the weight of the reaction mixture. The molecular weight of the matrix copolymer depends on, among other things, how much chain transfer agent is used and when it is added.

Also disclosed herein is a method for minimizing acrylonitrile migration in a polymer disclosed herein. The method includes the step of reducing the amount of residual styrene monomer in the acrylonitrile-butadiene-styrene copolymer.

Also disclosed herein is a method of making the acrylonitrile-butadiene-styrene polymer. The method includes the step of increasing the reaction time and reducing the pressure of the reaction system.

Disclosed are articles prepared from the compositions disclosed herein. Such articles may be fabricated in any known manner commonly used with polymers containing one or more vinylidene substituted aromatic compounds. The articles may be fabricated by molding, extrusion, thermoforming, foaming, blow molding, injection molding, extrusion blow molding and combinations thereof. The articles may be molded, extruded, extruded and molded, and the like. The articles disclosed may exhibit glass transition temperatures of 100 ° C or greater. The articles disclosed may be transparent or opaque.

### Illustrative Embodiments

The following examples are provided to illustrate the invention but are not intended to limit the scope thereof. All parts and percentages are by weight unless otherwise indicated.

### Example 1: Migration of Acrylonitrile from Acrylonitrile-Butadiene-Styrene Copolymer

Three different acrylonitrile-butadiene-styrene copolymer samples are tested. Sample 1 is produced under standard conditions (devol pressure of 20 mini-bar) at a mass acrylonitrile-butadiene-styrene plant, while Sample 2, which had low residual styrene monomer, is made under modified conditions (e.g., longer reaction times and reduced pressure) (devol pressure of 12 mini-bar) at a mass acrylonitrile-butadiene-styrene plant. Sample 3 is purchased from a commercial source (Chi Mei ABS) and is reported to provide low acrylonitrile migration under standard conditions. Samples 1 and 3 are not in accordance with the present invention.

Three test bars (total area 0.625 dm²) of each of Samples 1, 2 and 3 are totally immersed into 50 mL of food simulant (3 % acetic acid or 20% ethanol) and are conditioned for ten days at 40 °C. The test bars are removed, and the simulant is analyzed by GC/MS. The results are shown in Table 1, below.

**Table 1**

| Simulant | Sample 1 (ppb of acrylonitrile) | Sample 2 ppb of acrylonitrile) | Sample 3 ppb of acrylonitrile) |
|---|---|---|---|
| 3% acetic acid | 17 | 8 | 14 |
| 20% ethanol | 22 | 10 | 16 |

### Example 2: Head Space Residual GC Analysis

Head space residual GC analysis is performed on Samples 1, 2 and 3 to determine the residual monomer levels of acrylonitrile, ethylbenzene, styrene and n-butyl acrylate in styrene-based polymers. Samples are soaked in o-dichlorobenzene and conditioned in a capped glass vial at 90 °C for one hour. A gas samples is taken from the headspace of the vial and is injected into a gas chromatograph (e.g., Agilent Technologies 7890 Gas Chromatograph) to provide the results shown below in Table 2.

**Table 2**

| Residuals | Sample 1 (ppm) | Sample 2 (ppm) | Sample 3 (ppm) |
|---|---|---|---|
| Acrylonitrile | 3.4 | 2.5 | 2.0 |
| Styrene | 244 | 95 | 470 |
| Ethyl Benzene | 221 | 82 | 10 |

## Claims

1. An acrylonitrile-butadiene-styrene polymer comprising less than 200 ppm of residual styrene monomer, wherein the migration of residual acrylonitrile monomer from the acrylonitrile-butadiene-styrene polymer is less than 10 ppb, and wherein the migration of residual acrylonitrile monomer is determined in 3 % acetic acid as defined in the description.

2. The acrylonitrile-butadiene-styrene polymer of claim 1, wherein the amount of residual styrene monomer is less than 100 ppm.

3. The acrylonitrile-butadiene-styrene polymer of claim 1 or 2, wherein the amount of residual styrene monomer is greater than 50 ppm.

4. The acrylonitrile-butadiene-styrene polymer of claims 1-3, wherein the concentration of acrylonitrile is from 5 wt% to 40 wt%, the concentration of butadiene is from 5 wt% to 35 wt% and the concentration of styrene is from 25 wt% and to 90 wt%.

5. The acrylonitrile-butadiene-styrene polymer of claims 1-4, wherein the concentration of acrylonitrile is from 10 wt% to 35 wt%, the concentration of butadiene is from 6 wt% to 18 wt% and the concentration of styrene is from 50 wt% to 75 wt%.

6. The acrylonitrile-butadiene-styrene polymer of claims 1-5, wherein the concentration of acrylonitrile is from 10 wt% to 30 wt%, the concentration of butadiene is from 5 wt% and to 25 wt% and the concentration of styrene is from 40 wt% and to 85 wt%.

7. The acrylonitrile-butadiene-styrene polymer of claims 1-6, wherein the concentration of acrylonitrile is from 12 wt% to 30 wt%, the concentration of butadiene is from 10 wt% to 20 wt% and the concentration of styrene is from 50 wt% to 78 wt%.

8. The acrylonitrile-butadiene-styrene polymer of claim 1, wherein the concentration of acrylonitrile is 23 wt% the concentration of butadiene is 12 wt% and the concentration of styrene is 60 wt%.

9. The acrylonitrile-butadiene-styrene polymer of claims 1-7 further comprising a comonomer selected from n-butyl acrylate and/or N-phenyl maleimide.

10. The acrylonitrile-butadiene-styrene polymer of claim 9, wherein the concentration of n-butyl acrylate is from 0 wt% to 10 wt% and the concentration of N-phenyl maleimide is from 0 wt% to 5 wt%.

11. The acrylonitrile-butadiene-styrene polymer of claim 8, further comprising a comonomer selected from n-butyl acrylate and/or N-phenyl maleimide, wherein the concentration of n-butyl acrylate is from 0 wt% to 5 wt% and the concentration of N-phenyl maleimide is from 0 wt% to 5 wt%.

12. A method of minimizing acrylonitrile migration from an acrylonitrile-butadiene-styrene polymer comprising reducing the amount of residual styrene monomer in the acrylonitrile-butadiene-styrene polymer, wherein the amount of residual styrene monomer in the acrylonitrile-butadiene styrene polymer is less than 200 ppm and the migration of residual acrylonitrile monomer is less than 10 ppb, and wherein the migration of residual acrylonitrile monomer is determined in 3 % acetic acid as defined in the description.

## Patentansprüche

1. Acrylnitril-Butadien-Styrol-Polymer, umfassend weniger als 200 ppm restliches Styrolmonomer, wobei die Migration von restlichem Acrylnitrilmonomer aus dem Acrylnitril-Butadien-Styrol-Polymer weniger als 10 ppb beträgt und wobei die Migration von restlichem Acrylnitrilmonomer in 3%iger Essigsäure so wie in der Beschreibung definiert bestimmt wird.

2. Acrylnitril-Butadien-Styrol-Polymer nach Anspruch 1, wobei die Menge an restlichem Styrolmonomer weniger als 100 ppm beträgt.

3. Acrylnitril-Butadien-Styrol-Polymer nach Anspruch 1 oder 2, wobei die Menge an restlichem Styrolmonomer größer als 50 ppm ist.

4. Acrylnitril-Butadien-Styrol-Polymer nach den Ansprüchen 1-3, wobei die Konzentration von Acrylnitril 5 Gew.-% bis 40 Gew.-% beträgt, die Konzentration von Butadien 5 Gew.-% bis 35 Gew.-% beträgt und die Konzentration von Styrol 25 Gew.-% bis 90 Gew.-% beträgt.

5. Acrylnitril-Butadien-Styrol-Polymer nach den Ansprüchen 1-4, wobei die Konzentration von Acrylnitril 10 Gew.-% bis 35 Gew.-% beträgt, die Konzentration von Butadien 6 Gew.-% bis 18 Gew.-% beträgt und die Konzentration von Styrol 50 Gew.-% bis 75 Gew.-% beträgt.

6. Acrylnitril-Butadien-Styrol-Polymer nach den Ansprüchen 1-5, wobei die Konzentration von Acrylnitril 10 Gew.-% bis 30 Gew.-% beträgt, die Konzentration von Butadien 5 Gew.-% bis 25 Gew.-% beträgt und die Konzentration von Styrol 40 Gew.-% bis 85 Gew.-% beträgt.

7. Acrylnitril-Butadien-Styrol-Polymer nach den Ansprüchen 1-6, wobei die Konzentration von Acrylnitril 12 Gew.-% bis 30 Gew.-% beträgt, die Konzentration von Butadien 10 Gew.-% bis 20 Gew.-% beträgt und die Konzentration von Styrol 50 Gew.-% bis 78 Gew.-% beträgt.

8. Acrylnitril-Butadien-Styrol-Polymer nach Anspruch 1, wobei die Konzentration von Acrylnitril 23 Gew.-% beträgt, die Konzentration von Butadien 12 Gew.-% beträgt und die Konzentration von Styrol 60 Gew.-% beträgt.

9. Acrylnitril-Butadien-Styrol-Polymer nach den Ansprüchen 1-7, das ferner ein Comonomer, ausgewählt aus n-Butylacrylat und/oder N-Phenylmaleimid, umfasst.

10. Acrylnitril-Butadien-Styrol-Polymer nach Anspruch 9, wobei die Konzentration von n-Butylacrylat 0 Gew.-% bis 10 Gew.-% beträgt und die Konzentration von N-Phenylmaleimid 0 Gew.-% bis 5 Gew.-% beträgt.

11. Acrylnitril-Butadien-Styrol-Polymer nach Anspruch 8, das ferner ein Comonomer, ausgewählt aus n-Butylacrylat und/oder N-Phenylmaleimid umfasst, wobei die Konzentration von n-Butylacrylat 0 Gew.-% bis 5 Gew.-% beträgt und die Konzentration von N-Phenylmaleimid **0** Gew.-% bis 5 Gew.-% beträgt.

12. Verfahren zum Minimieren der Acrylnitrilmigration aus einem Acrylnitril-Butadien-Styrol-Polymer, umfassend das Reduzieren der Menge an restlichem Styrolmonomer in dem Acrylnitril-Butadien-Styrol-Polymer, wobei die Menge an restlichem Styrolmonomer in dem Acrylnitril-Butadien-Styrol-Polymer weniger als 200 ppm beträgt und die Migration von restlichem Acrylnitrilmonomer weniger als 10 ppb beträgt und wobei die Migration von restlichem Acrylnitrilmonomer in 3%iger Essigsäure so wie in der Beschreibung definiert bestimmt wird.

## Revendications

1. Polymère acrylonitrile-butadiène-styrène comprenant moins de 200 ppm de monomère styrène résiduel, dans lequel la migration de monomère acrylonitrile résiduel à partir du polymère acrylonitrile-butadiène-styrène est inférieure à 10 ppb, et dans lequel la migration de monomère acrylonitrile résiduel est déterminée dans 3 % d'acide acétique comme défini dans la description.

2. Polymère acrylonitrile-butadiène-styrène selon la revendication 1, dans lequel la quantité de monomère styrène résiduel est inférieure à 100 ppm.

3. Polymère acrylonitrile-butadiène-styrène selon la revendication 1 ou la revendication 2, dans lequel la quantité de monomère styrène résiduel est supérieure à 50 ppm.

4. Polymère acrylonitrile-butadiène-styrène selon les revendications 1 à 3, dans lequel la concentration d'acrylonitrile est comprise de 5 % en poids à 40 % en poids, la concentration de butadiène est comprise de 5 % en poids à 35 % en poids et la concentration de styrène est comprise de 25 % en poids jusqu'à 90 % en poids.

5. Polymère acrylonitrile-butadiène-styrène selon les revendications 1 à 4, dans lequel la concentration d'acrylonitrile est comprise de 10 % en poids à 35 % en poids, la concentration de butadiène est comprise de 6 % en poids à 18 % en poids et la concentration de styrène est comprise de 50 % en poids à 75 % en poids.

6. Polymère acrylonitrile-butadiène-styrène selon les revendications 1 à 5, dans lequel la concentration d'acrylonitrile est comprise de 10 % en poids à 30 % en poids, la concentration de butadiène est comprise de 5 % en poids jusqu'à 25 % en poids et la concentration de styrène est comprise de 40 % en poids jusqu'à 85 % en poids.

7. Polymère acrylonitrile-butadiène-styrène selon les revendications 1 à 6, dans lequel la concentration d'acrylonitrile est comprise de 12 % en poids à 30 % en poids, la concentration de butadiène est comprise de 10 % en poids à 20 % en poids et la concentration de styrène est comprise de 50 % en poids à 78 % en poids.

8. Polymère acrylonitrile-butadiène-styrène selon la revendication 1, dans lequel la concentration d'acrylonitrile est de 23 % en poids, la concentration de butadiène est de 12 % en poids et la concentration de styrène est de 60 % en poids.

9. Polymère acrylonitrile-butadiène-styrène selon les revendications 1 à 7 comprenant en outre un comonomère sélectionné parmi l'acrylate de n-butyle et/ou le N-phénylmaléimide.

10. Polymère acrylonitrile-butadiène-styrène selon la revendication 9, dans lequel la concentration d'acrylate de n-butyle est comprise de 0 % en poids à 10 % en poids et la concentration de N-phénylmaléimide est comprise de 0 % en poids à 5 % en poids.

11. Polymère acrylonitrile-butadiène-styrène selon la revendication 8, comprenant en outre un comonomère sélectionné parmi l'acrylate de n-butyle et/ou le N-phénylmaléimide, dans lequel la concentration d'acrylate de n-butyle est comprise de 0 % en poids à 5 % en poids et la concentration de N-phénylmaléimide est comprise de 0 % en poids à 5 % en poids.

12. Procédé destiné à minimiser la migration d'acrylonitrile à partir d'un polymère acrylonitrile-butadiène-styrène comprenant une réduction de la quantité de monomère styrène résiduel dans le polymère acrylonitrile-butadiène-styrène, dans lequel la quantité de monomère styrène résiduel dans le polymère acrylonitrile-butadiène-styrène est inférieure à 200 ppm et la migration de monomère acrylonitrile résiduel est inférieure à 10 ppb, et dans lequel la migration de monomère acrylonitrile résiduel est déterminée dans 3 % d'acide acétique comme défini dans la description.
